# EUROPEAN PATENT APPLICATION

(11) **EP 4 835 963 A1**
(43) Date of publication of application: **04.11.2026**
(21) Application number: 25867198.1
(22) Date of filing: 31.10.2025

(54) **BATTERY CELL**

(30) Priority: 14.03.2025 CN 202520456338 U
(71) Applicant: Eve Energy Co. Ltd., Huizhou, Guangdong 516000 (CN)
(72) Inventor: LI, Futao, Huizhou, Guangdong 516100 (CN); LI, Xixin, Huizhou, Guangdong 516100 (CN); ZOU, Qian, Huizhou, Guangdong 516100 (CN); ZHAO, Xin, Huizhou, Guangdong 516100 (CN)
(74) Representative: Nederlandsch Octrooibureau
(86) International application number: PCT/CN2025/131702
(87) International publication number: WO 2026/188806

(57) **Abstract**

Provided is a battery cell (100). The battery cell (100) includes a housing (10) and a seal assembly (20). Specifically, the housing (10) has an accommodation space (11) at an interior of the housing (10) and an electrolyte-injection hole (121) formed at a surface of the housing (10), and the electrolyte-injection hole (121) is in communication with the accommodation space (11). The seal assembly (20) includes a hot-melt adhesive film (21), the electrolyte-injection hole (121) is sealed by the hot-melt adhesive film (21), and the hot-melt adhesive film (21) is configured to be melted at a predetermined temperature

## Description

### CROSS-REFERENCE TO RELATED APPLICATIONS

This application claims priority to Chinese Patent Application No. 202520456338.1, filed with China National Intellectual Property Administration on March 14, 2025, the entire disclosure of which is incorporated herein by reference.

### FIELD

This application relates to the field of energy storage technologies, and more particularly, to a battery cell.

### BACKGROUND

During charging and discharging of lithium-ion batteries, continuous gas generation occurs due to side reactions between an electrolyte and electrode materials. Meanwhile, a rise in an internal temperature of the battery exacerbates thermal decomposition of the electrolyte and thermal expansion of contents within the battery, further leading to an accumulation of internal pressure. Especially under thermal abuse scenarios such as an external short circuit and overcharging, the internal temperature of the battery surges, leading to a further increase in a gas generation rate. If the pressure cannot be relieved in time, it may lead to housing deformation, sealing failure, or even an explosion risk.

To address the issue of rising internal pressure, a common structure in the related art is to provide a mechanical pressure relief valve at a housing or a top cover of the battery. Its operating principle is typically as follows. Pre-scored notches or micro-rupture structures, such as burst discs or scored grooves, are fabricated in a weak region of the housing. When the internal pressure reaches a critical threshold, stress concentration at the notches causes the housing to rupture, forming an instantaneous pressure relief hole that releases gas. While such designs can prevent battery explosion, they rely on precise control over a depth and a shape of the notchs as well as material fracture toughness to ensure that the pressure relief action is strictly matched with the pressure threshold.

### SUMMARY

Technical issues are as follows.

An independent arrangement of a pressure relief valve requires additional space to be reserved for its arrangement at a battery, significantly increasing structural complexity of a housing. For example, cylindrical batteries require integration of an explosion-proof valve assembly into a top cover, while prismatic hard-shell batteries typically require machining of scored groove structures at side walls thereof. As a result, an effective volume that could otherwise be used for filling of electrode active materials is occupied, thereby reducing an energy density. Furthermore, difficulty of a housing stamping process is raised, thereby lowering a yield rate. In addition, a spatial layout conflict between the pressure relief valve and inherent structures of a battery cell, such as an electrolyte-injection hole and an electrode post, further restricts a miniaturization design of the battery, making it difficult to meet a demand for compact batteries in consumer electronic devices.

Technical solutions are as follows.

The present disclosure provides a battery cell, aiming to solve a technical problem that makes it difficult to miniaturize the battery cell due to a conflict between the pressure relief valve and a size of an inherent structurals of the battery.

The present disclosure provides a battery cell. The battery cell includes a housing and a seal assembly. Specifically, the housing has an accommodation space at an interior of the housing and an electrolyte-injection hole formed at a surface of the housing, and the electrolyte-injection hole is in communication with the accommodation space. The seal assembly includes a hot-melt adhesive film, and the electrolyte-injection hole is sealed by the hot-melt adhesive film. The hot-melt adhesive film is configured to be melted at a predetermined temperature.

Beneficial effects are as follows.

In the present disclosure, the accommodation space is formed at the interior of the housing, and the electrolyte-injection hole is formed at the surface of the housing and in communication with the accommodation space. The seal assembly includes the hot-melt adhesive film, the electrolyte-injection hole is sealed by the hot-melt adhesive film, and the hot-melt adhesive film is configured to be melted at the predetermined temperature. The electrolyte-injection hole of the housing serves as both an electrolyte injection channel and a pressure relief outlet. The seal assembly, which also serves a pressure relief function, is directly sealed at the electrolyte-injection hole, eliminating a need for an independent mounting space required for the pressure relief valve in the related art.

Through structural coupling between the electrolyte-injection hole of the housing and the hot-melt seal assembly, the battery cell of the present disclosure achieves unified integration of sealing and pressure relief functions. Compared with the related art, the battery cell of the present disclosure has a simplified structure while retaining a pressure relief emergency function, thereby facilitating a streamlined and miniaturized design of an energy storage device.

Additional aspects and advantages of the embodiments of the present disclosure will be provided at least in part in the following description, or will become apparent in part from the following description, or can be learned from the practice of the embodiments of the present disclosure.

### BRIEF DESCRIPTION OF the DRAWINGS

In order to clearly explain technical solutions of embodiments of the present disclosure or in the related art, drawings used in description of the embodiments or the related art will be briefly described below. The drawings described below merely illustrate some embodiments of the present disclosure. Based on these drawings, other drawings can be obtained by those skilled in the art without creative effort.
FIG. 1 is a schematic view of an overall structure of a battery cell according to an embodiment of the present disclosure.
FIG. 2 is a top view of a battery cell according to an embodiment of the present disclosure.
FIG. 3 is a cross-sectional view taken along line A-A in FIG. 1.
FIG. 4 is a partial enlarged view of part B in FIG. 3.
FIG. 5 is a cross-sectional view taken along line C-C in FIG. 2.
FIG. 6 is a schematic view of an overall structure of a battery cell according to another embodiment of the present disclosure.
FIG. 7 is a cross-sectional view taken along line D-D in FIG. 6.

Description of reference numerals:
100, battery cell; 10, housing; 11, accommodation space; 12, top cover; 121, electrolyte-injection hole; 122, electrode post hole; 13, shell; 20, seal assembly; 21, hot-melt adhesive film; 22, bottom ring; 221, pressure relief hole; 23, top film; 30, jelly roll; 40, electrode post.

### DETAILED DESCRIPTION OF THE EMBODIMENTS

The technical solutions in the embodiments of the present disclosure will be clearly and completely described below with reference to the accompanying drawings.

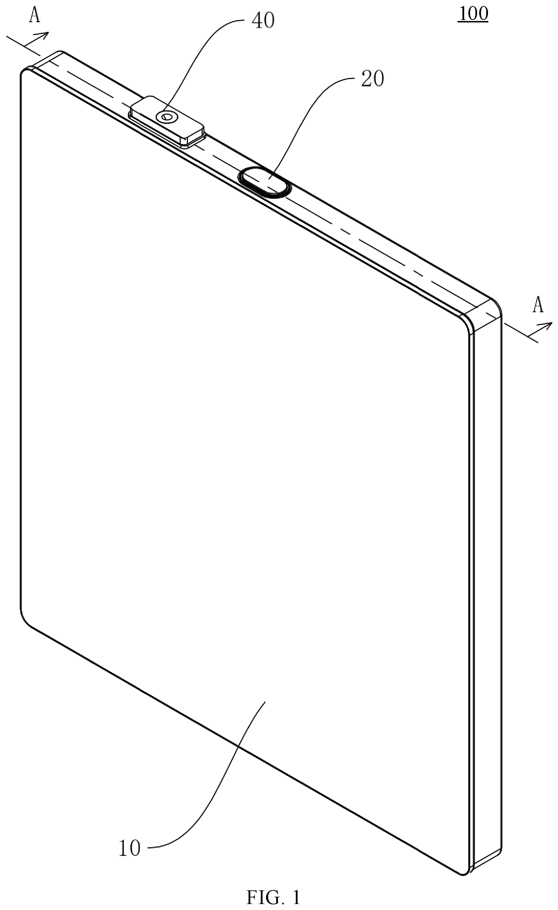

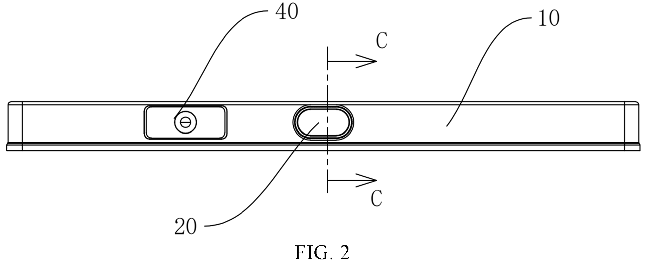

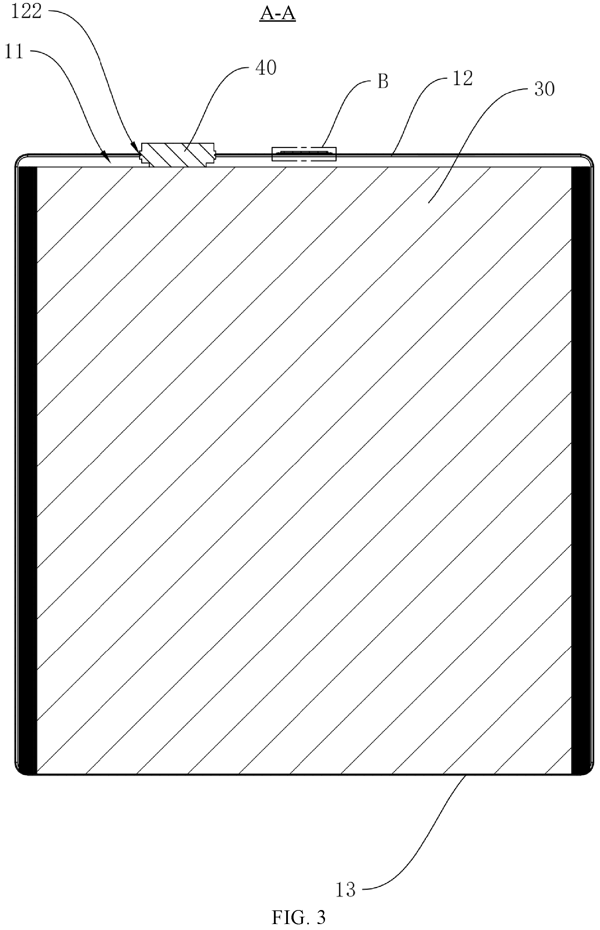

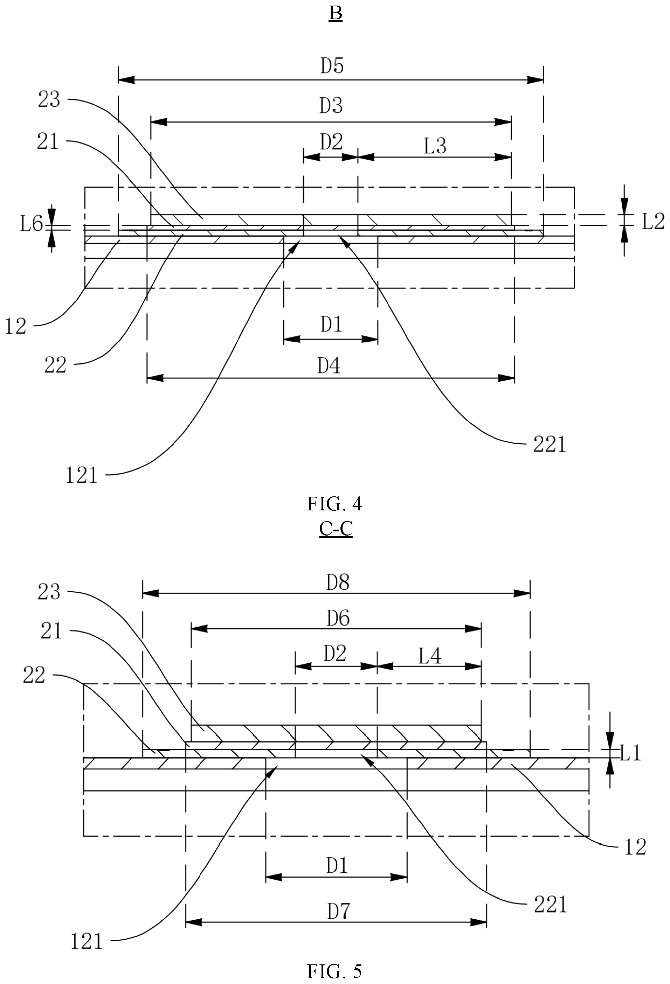

Referring to FIGS. 1 to 5, FIG. 1 is a schematic view of an overall structure of a battery cell according to an embodiment of the present disclosure; FIG. 2 is a top view of a battery cell according to an embodiment of the present disclosure; FIG. 3 is a cross-sectional view taken along line A-A in FIG. 1; FIG. 4 is a partial enlarged view of part B in FIG. 3; and FIG. 5 is a cross-sectional view taken along line C-C in FIG. 2.

In the related art, in order to release excessive pressure inside the battery cell to prevent an accident such as an explosion caused by pressure buildup, the battery cell is typically provided with a pressure relief valve at a housing 10 of the battery cell. However, a spatial arrangement conflict between the pressure relief valve and inherent structures of the battery cell, such as an electrolyte-injection hole 121 and an electrode post 40, further restricts a miniaturization design of a battery, making it difficult to meet a demand for compact batteries in consumer electronic devices.

To address the aforementioned deficits in the related art, one solution provided by the present disclosure is a battery cell 100. The battery cell 100 includes a housing 10 and a seal assembly 20. Specifically, the housing 10 has an accommodation space 11 at an interior of the housing and an electrolyte-injection hole 121 formed at a surface of the housing 10, and the electrolyte-injection hole 121 is in communication with the accommodation space 11. The seal assembly 20 includes a hot-melt adhesive film 21, the electrolyte-injection hole 121 is sealed by the hot-melt adhesive film 21, and the hot-melt adhesive film 21 is configured to be melted at a predetermined temperature.

This embodiment improves upon the inherent structures of the battery cell 100, enabling the electrolyte-injection hole 121 and the seal assembly 20 of the battery cell 100 to function as a pressure relief valve. The accommodation space 11 of a cylindrical shape configured to accommodate an electrode assembly is formed at the interior of the housing. The electrolyte-injection hole 121 configured for an injection of an electrolyte is formed at a top of the housing 10. The electrolyte-injection hole 121 penetrates the surface of the housing 10 and is in communication with the accommodation space 11. The seal assembly 20 at least includes the hot-melt adhesive film 21, the electrolyte-injection hole 121 is sealed by the hot-melt adhesive film 21. Optionally, the hot-melt adhesive film 21 may be directly bonded to seal the electrolyte-injection hole 121 through thermocompression, or the sealing of the electrolyte-injection hole 121 can be achieved by welding other structures to the housing 10. The hot-melt adhesive film 21 is a rigid solid at room temperature, forming a hermetic bonding interface with an edge of the electrolyte-injection hole 121 of the housing 10, which can effectively prevent evaporation of the electrolyte and water and ingress of external moisture or oxygen into the battery.

When an internal temperature of the battery rises to a critical temperature of the hot-melt adhesive film 21 due to abnormal heating, the hot-melt adhesive film 21 melts. Driven by an internal air pressure of the battery cell 100, a molten colloid flows away from the accommodation space 11 until the hot-melt adhesive film 21 is ruptured, forming a pressure relief channel. As a result, fluid contents inside the battery cell 100, such as the electrolyte and gaseous byproducts generated by a reaction, are quickly discharged through the electrolyte-injection hole 121, alleviating an emergency of an excessive internal pressure in the battery cell 100.

Exemplarily, the housing 10 may optionally be an aluminum alloy stamped structure; and the hot-melt adhesive film 21 may optionally be a polypropylene (PP) material with a melting point ranging from 80°C to 160°C.

According to some embodiments of the present disclosure, the seal assembly 20 further includes a bottom ring 22 having a pressure relief hole 221 penetrating the bottom ring 22. The bottom ring 22 is sandwiched between the hot-melt adhesive film 21 and the housing 10. The electrolyte-injection hole 121 is in communication with the pressure relief hole 221. A side of the pressure relief hole 221 away from the housing 10 is covered by the hot-melt adhesive film 21.

In this embodiment, the bottom ring 22 serves as a medium connecting the seal assembly 20 and the housing 10, avoiding a direct connection between the hot-melt adhesive film 21 and the housing 10, thereby improving processing accuracy of the hot-melt adhesive film 21.

Specifically, in a machining process where the hot-melt adhesive film 21 is directly thermocompression-bonded to the housing 10, the hot-melt adhesive film 21 is subjected to both heat and pressure simultaneously, which results in significant deformation of the hot-melt adhesive film 21. A dimensional tolerance caused by such a machining process requires a substantial design allowance during a design phase, which reduces design accuracy of the battery cell 100.

In this embodiment, the hot-melt adhesive film 21 is first assembled with the bottom ring 22 to form the seal assembly 20 on a component production line. The relevant technology can perform this assembly step relatively maturely without producing significant dimensional changes. Then, the bottom ring 22 is welded to the housing 10 to seal the electrolyte-injection hole 121. During assembling between the seal assembly 20 and the housing 10, the hot-melt adhesive film 21 is only heated but hardly subjected to pressure. Moreover, under a low-power welding condition, the hot-melt adhesive film 21 may not even reach its melting point. This allows the hot-melt adhesive film 21 of the battery cell 100 formed in this embodiment to maintain high dimensional accuracy, facilitating design and production.

Further, a thickness of bottom ring 22 is *L1*, satisfying 0.05 mm≤L1≤0.2 mm.

The thickness of the bottom ring 22 is related to structural strength of the seal assembly 20. If the bottom ring 22 is excessively thin, it may have insufficient mechanical strength and is thus prone to heat deformation or tearing during welding, leading to a failure of a bonding interface of the hot-melt adhesive film 21. If the bottom ring 22 is excessively thick, thermal stress concentration in the bottom ring 22 during welding is likely to cause deformation. Moreover, the excessively thick bottom ring 22 occupies an extra space, which is unfavorable to a lightweight design. When the thickness of the bottom ring 22 is limited to 0.05 mm≤L1≤0.2 mm, a balance can be achieved among structural rigidity, thermal stress dispersion, and process reliability. L1 is preferably 0.1 mm. In this case, the bottom ring 22 can be as thin as possible while ensuring its own strength, which can safeguard hermeticity of a welding interface and avoid wasting space.

Optionally, a diameter of the electrolyte-injection hole 121 is *D1*, and a diameter of the pressure relief hole 221 is *D2*, satisfying 0.5 mm≤D2≤D1≤2 mm.

The diameter of each of the electrolyte-injection hole 121 and the pressure relief hole 221 is related to smooth discharge of high-pressure contents. The diameter D1 of the electrolyte-injection hole 121 is limited by a parameter of the battery cell 100 and is typically a fixed value. If the pressure relief hole 221 is excessively small, a cross-sectional area of the pressure relief hole 221 is excessively small. In this case, flow resistance of the contents increases, and therefore a flow velocity decreases, which could easily result in a pressure relief delay or blockage of the pressure relief hole 221 caused by carbonization of the contents. If the diameter of the pressure relief hole 221 is larger than the diameter of the electrolyte-injection hole 121, a pressure drop may occur when the contents rush into the pressure relief hole 221 from the electrolyte-injection hole 121, making it difficult for the hot-melt adhesive film 21 to be ruptured. When the diameter D1 of the electrolyte-injection hole 121 and the diameter D2 of the pressure relief hole 221 are limited to 0.5 mm≤D2≤D1≤2 mm, optimal fluid conduction efficiency can be obtained. Preferably, D2=0.8 mm, and D1=1.2 mm. In this case, a cross-sectional area ratio of the pressure relief hole 221 to the electrolyte-injection hole 121 can ensure rapid directional contraction and a temperature rise of the fluid contents. Furthermore, a fluid impact force is dispersed through the stepped aperture design, thus preventing delayed opening of the hot-melt adhesive film 21 due to a sudden backpressure change.

According to some embodiments of the present disclosure, the seal assembly 20 further includes a top film 23 disposed at a side of the hot-melt adhesive film 21 away from the housing 10 and attached to the hot-melt adhesive film 21.

On the one hand, the arrangement of the top film 23 may change an orientation of the open channel of the hot-melt adhesive film 21. When the seal assembly 20 includes only the hot-melt adhesive film 21 without the top film 23, damage to the hot-melt adhesive film 21 mostly occurs in a region where the hot-melt adhesive film 21 is directly opposite to the electrolyte-injection hole 121. A thickness of the material sealing the electrolyte-injection hole 121 is the thickness of the hot-melt adhesive film 21 itself. In addition, when the top film 23 is attached to the hot-melt adhesive film 21, provided that the top film 23 has sufficient strength, the internal pressure of the battery cell 100 can only be relieved along a surface of the top film 23, i.e., is transmitted in a radial direction of the hot-melt adhesive film 21. This increases an effective sealing distance of the hot-melt adhesive film 21 in a sealed state, thus increasing hermeticity of the seal assembly 20.

On the other hand, when the hot-melt adhesive film 21 melts to open the pressure relief channel, the hot-melt adhesive film 21 in a region other than the channel and the top film 23 undergoes certain elastic deformation. When the internal pressure of the battery cell 100 is relieved and no high-pressure gas exists in the pressure relief channel to maintain its opening, stress stored in the top film 23 and the hot-melt adhesive film 21 due to the deformation is relieved, and the pressure relief channel is pressed closed. When the temperature drops below the melting point, the molten colloid re-solidifies, achieving self-closing of the pressure relief hole 221. Compared with the battery cell 100 provided with the pressure relief valve in the related art, the technical solution of this embodiment makes it less likely for the contents of the battery cell 100 to leak when repairing or replacing a faulty battery cell 100, thus reducing an operational risk for operators.

It should be noted that the above-mentioned elastic deformation of the hot-melt adhesive film 21 and the top film 23 should be understood as follows: during the opening of the pressure relief channel, an end of the top film 23 tilts relative to the housing 10 due to the opening of the pressure relief channel, thus storing elastic potential energy in an unmelted part of the top film 23 and the hot-melt adhesive film 21. In this process, plastic deformation of the top film 23 or a rheological behavior in the hot-melt adhesive film 21 may also occur. The existence of these two situations would only affect closing efficiency of the pressure relief channel. Due to the presence of the elastic deformation, the pressure relief channel constantly tends to close after the internal pressure of the battery cell 100 is relieved.

Further, a thickness of the top film 23 is *L2*, satisfying 0.05 mm≤L2≤0.2 mm.

If the thickness of the top film 23 is excessively small, the top film 23 may undergo plastic deformation during the opening of the pressure relief channel, making it difficult to store elastic potential energy for subsequent compression and closing of the pressure relief channel. If the thickness of the top film 23 is excessively large, the top film 23 may be barely deformed during the opening of the pressure relief channel. In this case, the top film 23 does not store elastic potential energy while increasing tensile stress in a thickness direction of the hot-melt adhesive film 21, exacerbating the rheological behavior of the hot-melt adhesive film 21, thereby making it difficult for the hot-melt adhesive film 21 itself to store energy. Therefore, by configuring the thickness of top film 23 to be within the range of 0.05 mm≤L2≤0.2 mm, the top film 23 can undergo appropriate elastic deformation during the opening of the pressure relief channel, facilitating the closing of the pressure relief channel after the internal pressure is relieved.

According to some embodiments of the present disclosure, the seal assembly 20 includes a bottom ring 22, the hot-melt adhesive film 21, and the top film 23 that are stacked sequentially in a direction away from the housing 10. The pressure relief hole 221 is formed at an inner side of the bottom ring 22. The electrolyte-injection hole 121 is in communication with the pressure relief hole 221. A side of the pressure relief hole 221 away from the housing 10 is covered by the hot-melt adhesive film 21. Each of the bottom ring 22, the hot-melt adhesive film 21, and the top film 23 has an elliptical outer contour.

Adopting the elliptical design for the outer contours of the components of the seal assembly 20 can optimize uniformity of circumferential stress distribution and adaptability of an assembling space. Compared with a circular structure, a major axis direction of an ellipse can match an asymmetrical internal layout of the housing 10 and shorten a distance between a sealing surface and a side wall of the housing 10, effectively avoiding an assembling interference risk. Furthermore, the major axis direction of the ellipse is particularly practical in a design of a vehicle-mounted battery cell 100 with a relatively large aspect ratio.

It should be noted that the outer contour in the present disclosure should be understood as a shape of an orthographic projection of a corresponding structure of the seal assembly 20 onto the surface of the housing 10 to which the corresponding structure of the seal assembly 20 is connected.

Further, a diameter of the pressure relief hole 221 is *D2*, the top film 23 has a major axis length of *D3*; a length of a major axis of the hot-melt adhesive film 21 is *D4*, a length of a major axis of the bottom ring 22 is *D5*, and an effective sealing distance of the seal assembly 20 in a direction of a major axis of the seal assembly 20 is *L3*, satisfying L3=min{D3, D4, D5}-D2; and a length of a minor axis of the top film 23 is *D6*; a length of a minor axis of the hot-melt adhesive film 21 is *D7*, a length of a minor axis of the bottom ring 22 is *D8*, and an effective sealing distance of the seal assembly 20 in a minor axis direction of the seal assembly 20 is *L4*, satisfying L4=min{D6, D7, D8}-D2, and 0.5 mm≤L4≤L3.

In a case where the top film 23 is provided, sealing capability of the hot-melt adhesive film 21 is determined by L3 and L4. Without considering damage to the top film 23 or welding failure of the bottom ring 22, the sealing capability of the hot-melt adhesive film 21 also represents sealing capability of the seal assembly 20. As L3 and L4 increase, it is more difficult for the contents of the battery cell 100 to break through the hot-melt adhesive film 21 to form the pressure relief channel. With 0.5 mm≤L4≤L3, the seal assembly 20 has strong hermeticity, making it difficult to be ruptured at a normal operating temperature of the battery cell 100 and only opening for pressure relief during thermal runaway of the battery cell 100.

Optionally, a thickness of the hot-melt adhesive film is *L6*, satisfying 0.01 mm≤L6≤0.1 mm.

In a case where the hot-melt adhesive film 21 is sandwiched between the top film 23 and the bottom ring 22, the hot-melt adhesive film 21 hardly performs any sealing function in the thickness direction of the hot-melt adhesive film 21. The thickness of the hot-melt adhesive film 21 is related to structural stability of the seal assembly 20 itself. An excessively thin hot-melt adhesive film 21 is likely to puncture when the top film 23 is thermocompression-bonded to the bottom ring 22, which affects structural integrity and reduces the effective sealing distance at the same time. With 0.01 mm≤L6≤0.1 mm, the thickness of the seal assembly 20 can be minimized as much as possible while ensuring a high qualification rate during processing of the seal assembly 20, thereby facilitating the lightweight design of the battery cell 100.

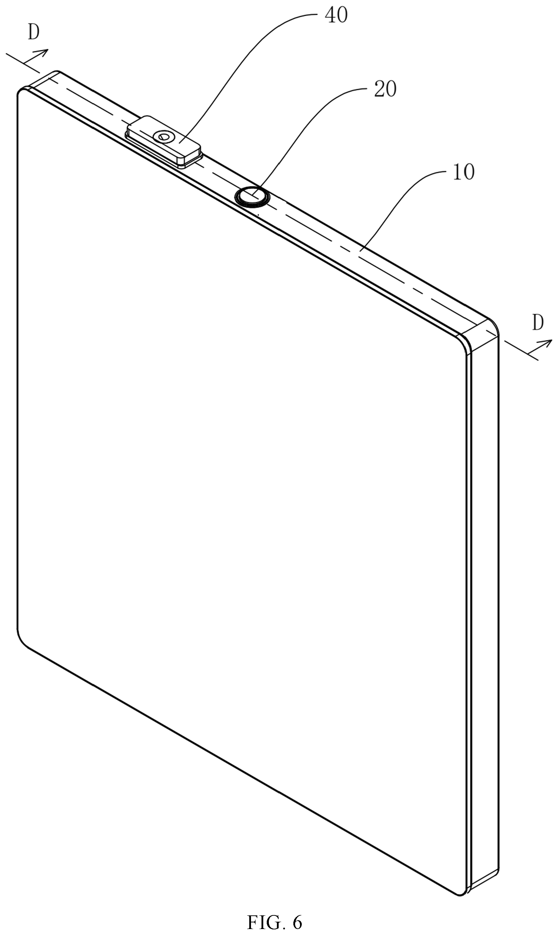

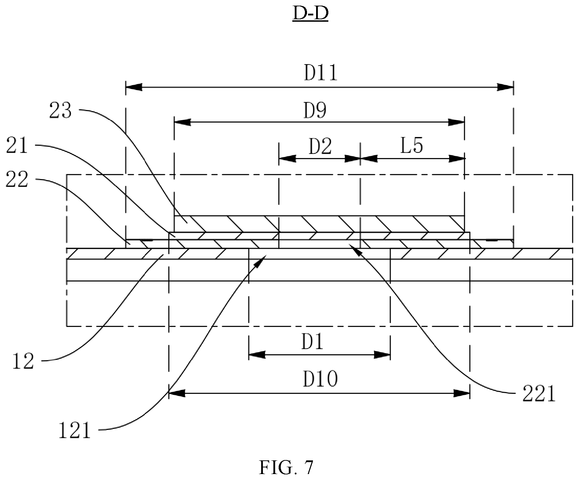

Referring to FIGS. 6 and 7, FIG. 6 is a schematic view of an overall structure of a battery cell 100 according to another embodiment of the present disclosure, and FIG. 7 is a schematic cross-sectional view taken along line D-D in FIG. 6.

According to some embodiments of the present disclosure, the seal assembly 20 includes a bottom ring 22, the hot-melt adhesive film 21, and the top film 23 that are stacked sequentially in a direction away from the housing 10. The pressure relief hole 221 is formed at an inner side of the bottom ring 22; and the electrolyte-injection hole 121 is in communication with the pressure relief hole 221. A side of the pressure relief hole 221 away from the housing 10 is covered by the hot-melt adhesive film 21; and each of the bottom ring 22, the hot-melt adhesive film 21, and the top film 23has a circular outer contour. A diameter of the pressure relief hole 221 is *D2*, a diameter of the top film 23 is *D9*, a diameter of the hot-melt adhesive film 21 is *D10*, a diameter of the bottom ring 22 is *D11*, and an effective sealing distance of the seal assembly is *L5*, satisfying L5=min{D9, D10, D11}-D2 and 0.53 mm≤L5.

In a case where the top film 23 is provided, sealing capability of the hot-melt adhesive film 21 is determined by *L5*. Without considering damage to the top film 23 or welding failure of the bottom ring 22, the sealing capability of the hot-melt adhesive film 21 also represents sealing capability of the seal assembly 20. As *L5* increases, it is more difficult for the contents of the battery cell 100 to break through the hot-melt adhesive film 21 to form the pressure relief channel. With 0.53 mm≤L5, the seal assembly 20 has strong hermeticity, making it difficult to be ruptured at a normal operating temperature of the battery cell 100 and only opening for pressure relief during thermal runaway of the battery cell 100.

According to some embodiments of the present disclosure, the housing 10 includes a top cover 12 and a shell 13. The shell 13 is covered by the top cover 12 to define an accommodation space 11. The top cover 12 has an electrode post hole 122, and the electrolyte-injection hole 121 that are formed at the top cover 12. The battery cell 100 further includes an electrode post 40 and a jelly roll 30. The jelly roll 30 is disposed in the accommodation space 11. The electrode post 40 passes through the electrode post hole 122 and is electrically connected to the jelly roll 30.

During operation of the battery cell 100, the electrode post 40 has an end connected to the jelly roll 30 and another end connected to an aluminum busbar. Each of the two ends of the electrode post 40 has relatively large resistance, thus making it a heat concentration point of the battery cell 100. During the thermal runaway of the battery cell 100 triggered by events such as overload, a vicinity of the electrode post 40 is also typically a high-voltage generation spot. By providing the seal assembly 20 and the electrode post 40 at one cover plate to bring the hot-melt adhesive film 21 close to the electrode post 40, the hot-melt adhesive film 21 can respond more quickly to relieve a pressure when the internal pressure of the battery cell 100 rises due to the thermal runaway, thereby further reducing an explosion risk of the battery cell 100.

## Claims

1. A battery cell, comprising:
a housing having an accommodation space at an interior of the housing and an electrolyte-injection hole formed at a surface of the housing, the electrolyte-injection hole being in communication with the accommodation space; and
a seal assembly comprising a hot-melt adhesive film, the electrolyte-injection hole being sealed by the hot-melt adhesive film, and the hot-melt adhesive film being configured to be melted at a predetermined temperature.

2. The battery cell according to claim 1, wherein the seal assembly further comprises a bottom ring, wherein:
the bottom ring has a pressure relief hole penetrating the bottom ring;
the bottom ring is sandwiched between the hot-melt adhesive film and the housing;
the electrolyte-injection hole is in communication with the pressure relief hole; and
a side of the pressure relief hole away from the housing is covered by the hot-melt adhesive film.

3. The battery cell according to claim 2, wherein a thickness of the bottom ring is L1, satisfying 0.05 mm≤L1≤0.2 mm.

4. The battery cell according to claim 2, wherein a diameter of the electrolyte-injection hole is D1, and wherein a diameter of the pressure relief hole is D2, satisfying 0.5 mm≤D2≤D1≤2 mm.

5. The battery cell according to claim 1, wherein the seal assembly further comprises a top film disposed at a side of the hot-melt adhesive film away from the housing and attached to the hot-melt adhesive film.

6. The battery cell according to claim 5, wherein a thickness of the top film is L2, satisfying 0.05 mm≤L2≤0.2 mm.

7. The battery cell according to any one of claims 1 to 6, wherein the seal assembly comprises a bottom ring, the hot-melt adhesive film, and a top film that are stacked sequentially in a direction away from the housing, wherein:
the bottom ring has a pressure relief hole formed at an inner side of the bottom ring;
the electrolyte-injection hole is in communication with the pressure relief hole;
an end of the pressure relief hole away from the housing is covered by the hot-melt adhesive film; and
each of the bottom ring, the hot-melt adhesive film, and the top film has an elliptical outer contour.

8. The battery cell according to claim 7, wherein:
a diameter of the pressure relief hole is D2, the top film has a major axis length of D3; a length of a major axis of the hot-melt adhesive film is D4, a length of a major axis of the bottom ring is D5, and an effective sealing distance of the seal assembly in a direction of a major axis of the seal assembly is L3, satisfying L3=min{D3, D4, D5}-D2; and
a length of a minor axis of the top film is D6; a length of a minor axis of the hot-melt adhesive film is D7, a length of a minor axis of the bottom ring is D8, and an effective sealing distance of the seal assembly in a minor axis direction of the seal assembly is L4, satisfying L4=min{D6, D7, D8}-D2 and 0.5 mm≤L4≤L3.

9. The battery cell according to claim 7, wherein a thickness of the hot-melt adhesive film is L6, satisfying 0.01 mm≤L6≤0.1 mm.

10. The battery cell according to any one of claims 1 to 6, wherein the seal assembly comprises a bottom ring, the hot-melt adhesive film, and a top film that are stacked sequentially in a direction away from the housing, wherein:
the bottom ring has a pressure relief hole formed at an inner side of the bottom ring;
the electrolyte-injection hole is in communication with the pressure relief hole;
an end of the pressure relief hole away from the housing is covered by the hot-melt adhesive film; and
each of the bottom ring, the hot-melt adhesive film, and the top film has a circular outer contour,
wherein a diameter of the pressure relief hole is D2, a diameter of the top film is D9, a diameter of the hot-melt adhesive film is D10, a diameter of the bottom ring is D11, and an effective sealing distance of the seal assembly is L5, satisfying L5=min{D9, D10, D11}-D2 and 0.53 mm≤L5.

11. The battery cell according to any one of claims 1 to 6, wherein:
the housing comprises a top cover and a shell, the shell being covered by the top cover to define the accommodation space, the top cover having an electrode post hole and the electrolyte-injection hole that are formed at the top cover; and
the battery cell further comprises an electrode post and a jelly roll, the jelly roll being disposed in the accommodation space, and the electrode post passing through the electrode post hole and being electrically connected to the jelly roll.
